# EUROPEAN PATENT SPECIFICATION

(11) **EP 1 352 005 B1**
(45) Date of publication and mention of the grant of the patent: **29.10.2008**
(21) Application number: 01989555.6
(22) Date of filing: 03.12.2001
(51) Int. Cl.: C08G 18/10, C08G 18/28, C08G 18/38, C09J 175/04

(54) **SUPRAMOLECULAR POLYMER FORMING POLYMER**
EIN SUPRAMOLEKULARES POLYMER BILDENDES POLYMER
POLYMERE PERMETTANT LA FORMATION D'UN POLYMERE SUPRAMOLECULAIRE

(30) Priority: 05.12.2000 EP 00126685
(43) Date of publication of application: 15.10.2003
(73) Proprietor: HUNTSMAN INTERNATIONAL LLC, Salt Lake City, Utah 84108 (US)
(72) Inventor: ELING, Berend, B-3060 Bertem (BE); LINDSAY, Christopher, Ian, B-3090 Overijse (BE)
(74) Representative: Moens, Marnix Karel Christiane
(86) International application number: PCT/EP2001/014082
(87) International publication number: WO 2002/046260

(56) References cited:
- EP-A- 0 301 705
- EP-A- 0 744 428
- EP-A- 1 031 589
- US-A- 4 322 327

## Description

This invention relates to the preparation of a polymer which is able to form a supramolecular polymer, and to the uses of the formed supramolecular polymer.

It is known for several years that supramolecular polymers are polymers in which the monomers are at least in part bond to one another via H-bridges.

When the monomer units have a low molecular weight, they form at low temperature a rigid dimensionally stable polymer. At higher temperatures however, since the H-bridges are much weaker, essentially only monomeric units are present and can be easily handled.

International Patent Application No. WO 98/14504 discloses a supramolecular polymer containing monomeric units that form H-bridges with one another, the H-bridge-forming monomeric units in pairs forming at least 4-H-bridges with one another. As H-bridge-forming monomeric units, substituted ureido-pyrimidones and ureido-pyrimidines were used. In examples XII and XIII of that International Patent Application is described the end-capping of polydimethyltrisiloxanes with 4-benzyloxy-6-(3-butenyl)-2-butylureidopyrimidine and 6-(3-butenyl)-2-butylureido-4-pyrimidone, respectively.

In "Reversible Polymers Formed from Self-Complementary Monomers Using Quadruple Hydrogen Bonding", by R.P. Sijbesma, H.B. Beijer, L. Brunsveld, B.J.B. Former, J.H.K. Ky Hirschberg, R.F.M. Lange, J.K.L. Lowe, E.W. Meijer, published in Science, Vol. 278, 28 November 1997, is disclosed in Fig. 2 the reaction of 6-tridecylisocytosine with hexanediisocyanate to give a bifunctional compound (2a) which forms reversible polymers. In Fig. 6 of that reference is also disclosed the functionalization of a trifunctional copolymer of propylene oxide and ethylene oxide with a diisocyanate, followed by a reaction with methylisocytosine to give a compound (7) which has the ability to form reversible polymer networks. These compounds (2a) and (7) are supposed to allow the formation of polymer networks that can be used in hot melts and coatings. However, as indicated in the reference, compound (2a) has a

EP-A-1 031 589 describes the reaction product of an isocyanate functional compound of which at least 40 wt.% has a MW of at least 500 and a nitrogen-containing compound such as isocytosine and aminopyridine and supramolecular compounds comprising said reaction products.

In "New Polymers Based on the Quadruple Hydrogen Bonding Motif", by Brigitte J.B. Folmer, pages 91-108, PhD Thesis, Technische Universiteit Bindhoven, 2000, is disclosed (see in particular page 96) the end-capping of hydroxy terminated polymers with a reactive synthon obtained by the reaction of methylisocytosine with 1,6-hexanediisocyanate. The hydroxy terminated polymers are a hydrogenated polybutadiene, a polyether, a polycarbonate and a polyester.

However, the mechanical strength of these materials is relatively low, and softening of the materials typically occur at relatively low temperatures which can therefore limit their practical utility.

An object of this invention is therefore to provide a process for the preparation of a polymer which is able to form a supramolecular polymer. This polymer has the following general formula: 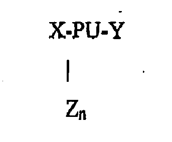 where
PU is a polymer chain comprising at least one polyurethane chain; and
n ranges from 0 to 8;
X, Y and Z, identical or different are H-bonding sites.

Another object of this invention is a supramolecular polymer formed at least from the polymer of the invention. Such a supramolecular polymer comprises units that form H-bridges with one another, wherein at least one of these units is the above polymer.

Such a supramolecular polymer combines good mechanical properties such as elongation, yield stress and low melt viscosities.

Other objects, features and advantages will become more apparent after referring to the following specification

### Polyurethane chain PU

According to the invention, the polymer chain PU comprises at least one polyurethane chain.

According to one embodiment, the PU is thermoplastic and/or elastomeric.

According to another embodiment, the polyurethane chain preferably comprises at least one soft block and at least two hard blocks. The soft and hard blocks are according to the common general knowledge in the art.

The polyurethane chain may have a molecular weight (MWn) ranging between large limits. The molecular weight is calculated according to the Dryadd Pro model (1998, Oxford Materials Ltd, UK). It generally has a low average molecular weight, i.e., an average molecular weight of less than 50000. Preferably, the average molecular weight is in the range of 2000 to 50000. More preferably, the average molecular weight is between 5000 and 40000.

This PU chain is obtained by classical methods known in the art (see for example Poyurethanes Handbook 2^{nd} edition, G. Oertel, 1994). The chains are notably obtained by the reaction of an isocyanate, an isocyanate-reactive compound (a polyol) and a chain extender.

The organic polyisocyanates for use in the process of the present invention is diphenylmethane diisocyanate in the form of its 2,4'-, 2,2'- and 4,4'-isomers and mixtures thereof. Most preferred is 4,4'-MDI. The functionality is 2. Mixtures may be used.

The isocyanate-reactive compounds to be used in the process of the present invention are polyols and polyol mixtures having hydroxyl functionalities of from 1.9 to 2.5, and a MW from 750 to 6000. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine, and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes. The isocyanate-reactive compound is a polyol which is preferably a polyether or a polyester or mixtures thereof. Mixtures may be used.

A chain extender is classically used; it is traditionally a low molecular weight polyol, typically a diol. The MW ranges from 62 to 750; the functionality ranges from 1.9 to 2.1. Examples of suitable diols include ethylene glycol, diethylene glycol, butanediol, triethylene glycol, tripropylene glycol, 2-hydroxyethyl-2'-hydroxypropylether, 1,2-propylene glycol, 1,3-propylene glycol, Pripol® (Uniquema, Gouda, NL), dipropyl glycol, 1,2-, 1,3- and 1,4-butylene glycols, 1,5-pentane diol, bis-2-hydroxypropyl sulphide, bis-2-hydroxyalkyl carbonates, p-xylylene glycol, 4-hydroxymethyl-2,6-dimethyl phenol and 1,2-, 1,3- and 1,4-dihydroxy benzenes. PEG, PPG (e.g. 200) as well as PTHF (also known as PTMG) (e.g. 400) may also be used. Mixtures may be used.

Optional trifunctional chain extenders such as glycerol, trimethylolpropane and its alkoxylated derivatives may be used in combination with bifunctional chain extenders.

The quantities of the polyisocyanate compositions and the polyfunctional isocyanate-reactive compositions as well as those of the chain extender to be reacted (in the absence of end-cap monomer) will depend upon the nature of the polyurethane to be produced and will be readily determined by those skilled in the art. The isocyanate index varies between 90 and 200.

### H-bonding groups

According to the invention, the polymer chain PU bears the H-bonding groups X and Y, and optionally Z, which are identical or different.

X and Y are obtained by the reaction of a terminal isocyanate group with an amine of formula H₂N-C(R₃)=N-R₄, where R₃ and R₄ are each independently a C1-C6 alkyl or C3-C6 cycloalkyl group, or together can form a ring having one or two cycle(s), one or both of R₃ and R₄ being optionally interrupted by one or more heteroatom(s) selected from N, O and S, with a MW less than 400.

Preferably, at least one of R₁ and R₂ or R₃ and R₄ respectively is interrupted by one or more heteroatom(s).

Preferably, the amine is of formula 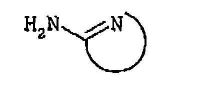 where the curve is a ring having one or two cycles, optionally interrupted by one or two heteroatoms selected from N, O and S.

The amine can be selected from the group consisting of 2-aminopyrimidine, isocytosine, 6-alkylisocytosine such as 6-methylisocytosine, 2-aminopyridine, 5-amino-uracil 6-tridecylisocytosine, 6-phenyl-isocytosine, 2-amino-6-(3-butenyl)-4-pyrimidone, p-di-(2-amino-6-ethyl-4-pyrimidone) benzene, 2-amino 4-pyridone, 4-pyrimidone 6-methyl-2-amino-4-pyrimidone, 6-ethyl-2-amino-4-pyrimidone, 6-phenyl-2-amino-4-pyrimidone, 6-(p-nitrophenyl)isocytosine, 6-(trifluoromethyl) isocytosine and their mixtures.

Examples of such compounds are 2-aminopyrimidine, 5-aminouracil, isocytosine and 6-alkylisocytosine such as 6-methylisocytosine.

The preferred amines are 2-aminopyrimidine and 6-alkylisocytosine such as 6-methylisocytosine.

The weight percentage of the groups X and Y based on the weight of the entire polymer of the invention generally ranges from 0.05 to 20% and preferably from 0.1 to 5%.

For example, one can cite as amine compounds the following compounds:
2-aminopyrimidine (AP): (formula) 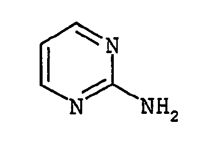
isocytosine: (formula) 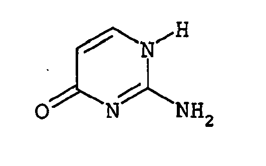
6-methylisocytosine (Melso) : (formula)

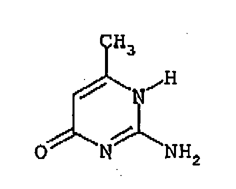

### Process according to the invention

2-aminopyrimidine is one of the preferred reactants, since its melting point is quite low, about 125°C. This is interesting from a production viewpoint, because it allows to prepare the polymer of the invention at lower temperatures.

6-alkylisocytosine such as 6-methylisocytosine is one of the preferred reactants, because of the powerful effect, i.e. the resulting (supra)polymer exhibits high mechanical properties with low viscosities at melt.

The process of the invention is one in which the polymers are obtained by reacting the polyisocyanate (1) MDI with a functionality of 2, a polyol (2) having a MW from 750 to 6000 and a functionality from 1.9 to 2.5, a polyol (3) having a MW from 62 to 750 with a functionality of 1.9 to 2.1 and an amine compound (4) of formula H₂N-C(R₃)=N-R₄, where R3 and R4 are each independently a C1-C6 alkyl or C3-C6 cycloalkyl group, or together can form a ring having one or two cycle(s), all being optionally interrupted by one or more heteroatom(s) selected from N, O and S, with a MW less than 400 wherein the amount of isocyanate (1), polyol (2), polyol (3) and amine (4) is 10-50, 35-90, 1-30 and 0.5-20 by weight respectively per 100 parts by weight of isocyanate (1), polyol (2), polyol (3) and amine (4) wherein the reaction is conducted at an isocyanate index of 90 to 200, preferably 95 to 150, especially 98 to 102.

The polymers can be synthesised by either a solution or a bulk reaction process. In both cases, isocyanate (1), polyol (2), polyol (3) and amine (4) can be polymerised in a one-step process in the presence of a suitable catalyst in order to achieve the desired product. Alternatively, isocyanate (1) may be prepolymerised with polyol (2) and subsequently co-reacted with a blend of polyol (3) and amine (4) to obtain said product. This route of making polymers also allows producing polymers of the invention with high amounts of polyol (3), Such polymers are particularly useful in hot melt adhesive type applications, In order to accommodate this synthetic versatility without the occurrence of undesired covalent chain extension or cross-linking, dependent on the number or primary amine groups of amine (4), it is essential that amine (4) contains a single primary amine group. An amine with only one primary amine group allows controlling the polymer structure and polymer molecular weight precisely.

In a preferred embodiment, the polymer is obtained by bulk polymerisation of the components in the presence of mechanical shear, for example within the chambers of a Banbury.RTM.type mixer or twin-screw extruder. In the bulk polymerisation, it is preferred that the powdered amine (4) is milled to a suitably small particle size in order to facilitate rapid and efficient reaction.

### Supramolecular polymers of the invention

Thanks to its H-bonding groups X and Y, the polymer of the invention has the ability to allow the formation of a supramolecular polymer at room temperature.

This is represented below, with isocytosine as an example, The dotted lines represent the H-bonds.

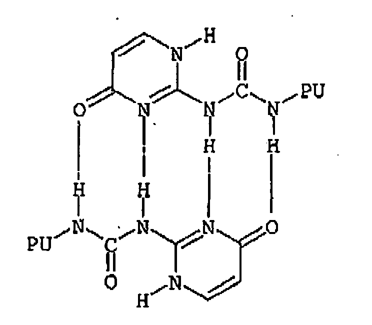

Therefore, an object of the invention is also a supramolecular polymer comprising units that form H-bridges with one another, and in which at least one of these units is a polymer prepared according to the invention as described above.

The remaining units can be different units, for example, units as described in aforesaid International Patent Application No. WO 98/14504. Preferably the units are the same.

In the polymer of the invention, the groups X and Y generate thermoreversible linear chain extension through H-bonding interactions.

Thus the units have the capability to auto chain extend by chain-end interaction through H-bonding interaction.

Since the H bonds are thermoreversible, at low temperatures, the H-bond interaction is high and the supramolecular polymer has an apparent high molecular weight. At high temperature, the H-bond interaction does not exist anymore or is low and the supramolecular polymer mainly decomposes into its monomeric units and behaves as a low molecular weight polymer.

In other words, when heated, the hydrogen bonds break and give a low viscosity material. Therefore, the supramolecular polymer has pseudo-high molecular weight properties at room temperature but low molecular weight properties at melt.

Without wishing to be bound by theory, it is believed that the temperature at which the melting transition occurs in the polymers of the current invention is controlled by the design of the hard block. This transition temperature may be equal to or higher than the temperature at which the H-bonding interactions between the chain-ends are predominantly dissociated. Typically, the dissociation temperature of the end-group H-bonding interactions is greater than 80°C and the hard block melting temperature is greater than 100°C. The ability to systematically control the melting temperature of the polymer through hard block design and the weight percentage of the hard block material in the polymer is an additional advantage of the polymers according to the present invention.

### Uses of the supramolecular polymer of the invention

The supramolecular polymer of the invention can generally be used in all applications where the PUs (such as those forming the PU chain) are used.

Hot melts adhesive is one of the preferred applications. In this case, a unique feature of the supramolecular polymer of the invention is that it provides an adhesive having no unreacted NCO group (unlike reactive hot-melts that require water to fully cure). This is also an advantage in terms of safety and handling. Another unique feature of the supramolecular polymer of the invention is that it does not require solvent, unlike known solvent-borne TPU adhesives.

Another advantage provided by the supramolecular polymer of the invention is that it does not need moisture to reach ultimate mechanical properties. As such, it can be used in adhesive applications of non-moisture permeable sustrates like A1-A1 joints.

Another application is rotational and/or slush molding, since fluidity is very high under the conditions used, ensuring a good spread in the mold. Still another application is injection molding and the manufacture of TPU foams.

The main advantage of the supramolecular polymers is their lower viscosity at melt than the uncapped ones (which do not form supramolecular polymers). This allows easier processing, while retaining good mechanical properties at room temperature. To evaluate their efficiency, the properties were plotted versus viscosity at melt, since an increase in melt viscosity corresponds to an increase in the molecular weight.

### Examples

### Example 1

Prepolymer 1 was prepared by stirring a mixture of 73pbw of a polypropyleneglycol (PPG2000) having a nominal functionality of 2 and nominal MW 2000 together with 27pbw "Suprasec® MPR" (4,4' MDI less then 2% of the 2,4' MDI isomer) at 87°C under nitrogen for three hours. After cooling, the prepolymer was stored as a masterbatch under nitrogen.

A pre-calculated amount of 1,4-butanediol BD (50wt% solution in dimethylacetamide) was added dropwise over a period of 20 minutes to a known amount of a stirred 50wt% dimethylacetamide solution of the prepolymer at 87°C under nitrogen and the heating/atirring were maintained for a further 3 hours. A dimethylacetamide solution of the desired end-capping compound was added to the stirred reaction mixture at 87°C and the reaction conditions were maintained for a further 3 hours. After cooling, the polymer was isolated by casting at 50°C in a vacuum oven or by precipitation of a 30wt% dimethylacetamide solution into a four-fold (by mass) excess of a non-solvent (80vol% water/20vol% ethanol). The formulations of the resultant polymer are given in Table 1.

**Table 1**

| Sample | End-Capping Compound | pbw Prepol. 1 | pbw BD | pbw End Group |
|---|---|---|---|---|
| 1A1 | isocytosine | 92.5 | 5 | 2.5 |
| 1A2 | isocytosine | 93.0 | 5.5 | 1.5 |
| 1A3 | isocytosine | 93.1 | 5.9 | 1.0 |
| 1B1 | 6-methyl isocytosine | 93.0 | 5.0 | 2.0 |
| 1B2 | 6-methyl isocytosine | 92.65 | 5.5 | 1.85 |
| 1B3 | 6-methyl isocytosine | 92.6 | 5.9 | 1.5 |
| 1C1 | 2-amino pyrimidine | 92.2 | 4.9 | 2.9 |
| 1C2 | 2-amino pyrimidine | 92.2 | 5.5 | 2.3 |
| 1C3 | 2-amino pyrimidine | 92.2 | 5.9 | 1.9 |
| 1D1 Comp. | ethoxyethoxy-ethanol | 88.2 | 4.7 | 7.1 |
| 1D2 Comp. | ethoxyethoxy-ethanol | 88.9 | 5.3 | 5.8 |
| 1D3 Comp. | ethoxyethoxy-ethanol | 89.9 | 5.7 | 4.4 |
| 1D4 Comp. | ethoxyethoxy-ethanol | 90.7 | 6.3 | 3.0 |
| 1E Comp. | None | 92.6 | 7.4 | 0 |

Tensile testing was performed at ambient temperature and a cross-head speed of 100mm/minute on compression-moulded tensile specimens of type S2 (norm DIN53504; 2mm thickness). The results of these tests are recorded in Table 2 (at ambient temperature).

**Table 2**

| Sample | Tensile Strength (Mpa) | %Elongation at Break |
|---|---|---|
| 1A1 | 2.66 | 487 |
| 1A2 | 3.98 | 655 |
| 1A3 | 7.41 | 760 |
| 1B1 | 2.32 | 308 |
| 1B2 | 4.20 | 618 |
| 1B3 | 7.15 | 705 |
| 1C1 | 1.51 | 124 |
| 1C2 | 2.45 | 211 |
| 1C3 | 3.10 | 278 |
| 1D1 Comp. | - | - |
| 1D2 Comp. | 1.15 | 58 |
| 1D3 Comp. | 1.77 | 153 |
| 1D4 Comp. | 2.73 | 212 |
| 1^{E} Comp. | 5.41 | 553 |

### Rheology

The rheological performance of the TPUs was assessed by Rotational Dynamic Shear (RDS) experiments using a Rheometrics RMS800 rheometer.

More precisely, RDS rheometry was used to determine the melting behavior and the viscoelastic behavior of the TPUs in the molten state.

The experiments were carried out in the following way.

First, a solvent casting (0.5 mm thick) was prepared by dissolving each TPU in DMAc to give approximately a 25 w/w % solution. 160 g of the solution was then degassed and poured into a flat glass mould in a cool oven. The solvent was then removed by leaving the casting in the oven at 80°C for 24 hours.

Then two 25 mm diameter discs were cut from the solvent casting and inserted under a slight normal pressure between two 25 mm diameter parallel plates to give a 1 mm-thick specimen.

Each experiment was then programmed using the following values:
radius: 12.5 mm
frequency: 10.0 rad/s
initial temperature : 40°C
final temperature : 250 °C
step size : 5°C/min
strain : 5%
ramp rate : 5
measurement time : 30 s

The viscosities of the polymers in the molten state at 180°C and 200°C are recorded in Table 3.

**Table 3**

| Sample | Melt Viscosity at 180°C | Melt Viscosity at 200°C |
|---|---|---|
| | (Pa.s) | (Pa.s) |
| 1A1 | 3 | 0.8 |
| 1A2 | 34.5 | 2.0 |
| 1A3 | 122.5 | 44 |
| 1B1 | 3.75 | 08 |
| 1B2 | 9 | 4 |
| 1B3 | 56 | 5.5 |
| 1C1 | 2.6 | 1.9 |
| 1C2 | 18.9 | 7.7 |
| 1C3 | 77 | 19 |
| 1D1 Comp. | 0.7 | 0.3 |
| 1D2 Comp. | 5 | 3 |
| 1D3 Comp. | 15 | 5 |
| 1D4 Comp. | 95 | 12 |
| 1E Comp. | 174 | 34 |

### Example 2

Prepolymer 1 was synthesised according to the procedure described in Example 1. A pre-calculated amount of a 50wt% solution of Suprasec MPR (Table 3) was then added to a stirred 50wt% dimethylacetamide solution of Prepolymer 1 at 87°C under nitrogen and the reaction continued for 3 hours.

In the case of Polymer 2A a dimethylacetamide solution of 6-methylisocytosine was added and the resultant reaction mixture heated with stirring at 87°C for 3 hours. After cooling, the polymer was isolated by casting at 50°C in vacuo.

The following table 4 gives the weight composition.

**Table 4**

| Sample | Pbw PPG2000 | pbw Suprasec MPR | pbw melso |
|---|---|---|---|
| 2A Comp. | 83.7 | 14.8 | 1.5 |
| 2B Comp. | 83.7 | 16.3 | 0 |

### Example 3

Prepolymer 3 was prepared by stirring a mixture of 78.6pbw of a ethyleneglycol / 1,4 butanediol adipate polyester in which the molar ratio of the two glycols amounts 1 to 1 and a hydroxyl value of the polyester amounts to 50 mgKOH/g together with 21,4pbw "Suprasec MPR" at 87°C under nitrogen for three hours. After cooling, the prepolymer was stored as a masterbatch under nitrogen.

A pre-calculated amount or 1,4-butanediol (50wt% solution in dimethylacetamide) was added dropwise over a period of 20 minutes to a known amount of a stirred 50wt% dimethylacetamide solution of the prepolymer at 87°C under nitrogen and the heating/stirring were maintained for a further 3 hours. A dimethylacetamide solution of the desired end-capping compound was added to the stirred reaction mixture at 87°C and the reaction conditions were maintained for a further 3 hours. After cooling, the polymer was isolated by casting at 80°C in an oven. The formulations of the resultant polymers are given in Table 5,

**Table 5**

| Sample | End-Capping Compound | pbw Prepol. 3 | pbw BD | pbw End Group |
|---|---|---|---|---|
| 3B1 | 6-methyl isocytosine | 92.7 | 2.6 | 4.7 |
| 3B2 | 6-methyl isocytosine | 93.3 | 3.0 | 3.7 |
| 3B3 | 6-methyl isocytosine | 93.9 | 3.3 | 2.8 |
| 3B4 | 6-methyl isocytosine | 95.2 | 3.9 | 0.9 |
| 3C1 | 2-amino pyrimidine | 93.8 | 2.6 | 3.6 |
| 3C2 | 2-amino pyrimidine | 94.1 | 3.0 | 2.9 |
| 3C3 | 2-amino pyrimidine | 94.5 | 3.4 | 2.1 |
| 3C4 | 2-amino pyrimidine | 95.4 | 3.9 | 0.7 |
| 3D1 Comp. | ethoxyethoxy-ethanol | 92.4 | 2.6 | 5.0 |
| 3D2 Comp. | ethoxyethoxy-ethanol | 93.0 | 3.0 | 4.0 |
| 3D3 Comp. | ethoxyethoxy-ethanol | 93.6 | 3.4 | 3.0 |
| 3D4 Comp. | ethoxyethoxy-ethanol | 95.1 | 3.9 | 1.0 |
| 3E Comp. | None | 95.7 | 4.3 | 0.0 |

Tensile testing was performed at ambient temperature and a cross-head speed of 100mm/minute on solvent-cast tensile specimens of type S2 (norm DIN53504; 0.5mm thickness). The results of these tests are recorded in Table 6.

**Table 6**

| Sample | Elongation at break (%) | Stress at break (Mpa) | Stress at 100% elongation | Stress at 200% elongation | Stress at 300% elongation |
|---|---|---|---|---|---|
| 3B1 | 914.39 | 4.88 | 2.41 | 2.76 | 3 |
| 3B2 | 815.8 | 11.41 | 3,04 | 3.67 | 4.31 |
| 3B3 | 869.07 | 17.2 | 3.21 | 3.68 | 4.57 |
| 3B4 | 829.2 | 18.16 | 2.95 | 3.86 | 4.64 |
| 3B5 | 785.65 | 21.83 | 2.88 | 3.53 | 4.35 |
| 3C1 | 913.08 | 4.98 | 2.21 | 2.71 | 3.14 |
| 3C2 | 836.31 | 16.64 | 2.58 | 3.2 | 4.02 |
| 3C3 | 852.2 | 17.91 | 2.55 | 3.19 | 4.08 |
| 3C4 | 803.54 | 26.63 | 3.01 | 3.82 | 5.05 |
| 3C5 | 877.19 | 16.78 | 2.64 | 3.22 | 3.96 |
| 3C6 | 756.46 | 3.42 | 1.99 | 2.38 | 2.70 |
| 3D1 Comp. | 867 | 5.52 | 2.3 | 2.69 | 3.13 |
| 3D2 Comp. | 801.65 | 4.94 | 2.16 | 2.85 | 3.29 |
| 3D3 Comp. | 713.39 | 28.63 | 2.93 | 3.83 | 5.06 |
| High molecular weight | 715 | 31.18 | 2.88 | 3.71 | 4.96 |

Rotational Dynamic Shear (RDS) rheometry was performed on solvent-cast discs (12.5mm radius; 1mm thickness) in temperature sweep mode according to the conditions described in Example 1. The viscosities of the polymers in the molten state at 170oC, 180oC and 200oC are recorded in Table 7.

**Table 7**

| Sample | Melt Viscosity at 184°C (Pa.s) | Melt Viscosity at 200°C (Pa.s) |
|---|---|---|
| 3B1 | 34 | 11 |
| 3B2 | 147 | 20 |
| 3B3 | 550 | 89 |
| 3B4 | 46 | 45 |
| 3B5 | 1500 | 160 |
| 3C1 | 200 | 83 |
| 3C2 | 1216 | 413 |
| 3C3 | 1200 | 351 |
| 3C4 | 2026 | 903 |
| 3C5 | 1230 | 440 |
| 3C6 | 85 | 17 |
| 3D1 Comp. | 210 | 46 |
| 3D2 Comp. | 225 | 59 |
| 3D3 Comp. | 3400 | 1335 |
| 3E Comp. | 2500 | 910 |

### Example 4

Several of the polymers according the invention of Example 1 and new examples 4 (4F1 to 4I1) were tested as adhesives to bond steel to steel. To that aim lap shear test specimen were produced in the following manner. Stainless steel test plates of material type 1,4301 with dimensions of 100 x 25 x 1,5 mm were obtained from Rochell GmbH, Moosbrunn, Germany. Prior to use the test plates were degreased with acetone. The test plates were put on a hot plate, which had a temperature between 50 °C. and 150 °C. for at least 2 minutes to increase the temperature of the test plates. In the mean time some polymer was heated above its flow point. To that aim approximately 10 gram of polymer was put in a 125 mL glass jar and heated for at least 15 minutes using an oil bath at a temperature between 60 °C, and 200 °C.. A sufficient amount of molten polymer was brought onto a test plate with a metal spatula to slightly overfill the 12.5 x 25 x 0.3 mm joint of the bond. The joint was assembled by positioning the test plates with 12.5 mm overlap. Subsequently the test plates were slightly pressed together and clamped for about 15 minutes using a universal double clip. For each polymer six specimens were prepared. The lap joint test specimens were conditioned in the lab for at least 2 weeks prior for physical testing. The tensile strength was determined at a crosshead speed of 50 mm/min. and was calculated from the measured tensile force divided by the overlap area. For each series the average value of the tensile strength, its standard deviation and the failure mode were reported and given in Table 8. New examples 4 were made as follows:

The polyols used were 1,4 butanedioladipate polyester with an hydroxyl vale of 51 mgKOH/g (polyester A) and 1,6 hexanedioladipate polyester with a hydroxyl value of 30 mgKOH/g (polyester B). The chain extenders (CE) used were tripropylene glycol (TPG), 1,4 butanediol (BD) and 1,6 hexanediol (HD). The isocyanate used was 'Suprasec' MPR. The amine was 6-methylisocytosine, which was finely milled (typical d₅₀= 1.45micron; d₉₇ 10micron). As an antioxidant 'IRGANOX' 1010 (antioxidant from Ciba Geigy, IRGANOX is a trademark) was used. The polyester and isocyanate were heated to 80 °C. prior to use. The chain extenders were heated to 60 °C.
The required amounts of polyester, chain extender, isocyanate, amine and antioxidant were weighed into a paper cup and mixed for 1 minute using a 'Heidolph' ('Heidolph' is a trademark) mechanical mixer at 4000 rpm. The total weight of the ingredients, excluding the weight of antioxidant, in all cases amounts to 70 g. The weight amount of 'IRGANOX' 1010 in the mixture always amounted to 0.2g/70 g of reaction mixture. Approximately 50g of the reaction mixture was poured into the mixing chamber of a Brabender Plasticord internal mixer fitted with counter-rotating screws and isothermally heated at 180°C. When the mixture in the mixer had reached temperatures of 180 °C, 0.05g of 'DABCO' S (catalyst from Air Products; DABCO is a trademark) was added to the reacting mixture. The polymerisation was allowed to proceed to completion (typically 2 minutes) and, after cooling, the resultant polymer was removed from the mixer for testing. The residence time of the mixture in the mixer never exceeded 3 minutes. The weight amount of reactants for the various polymers is given in the table below.

| polymer polyester pbw of polyeste pbw of isocyanate CE pbw of CE pbw of melsc | | | | | |
|---|---|---|---|---|---|
| 4F1 | A | 46.5 | 16.9 HD | 4.5 | 2.1 |
| 4G1 | A | 46.6 | 15.2 TPG | 6.1 | 2.1 |
| 4G2 | A | 42.7 | 17.3 TPG | 8.1 | 1.9 |
| 4G3 | A | 38.5 | 19.4 TPG | 9.6 | 2.5 |
| 4H1 | B | 38.5 | 18.7 TPG | 11.2 | 1.6 |
| 4I1 | A | 46.5 | 17.7 BD | 3.7 | 2.1 |

### Results:

**Table 8**

| Polymer | Oil bath | Plate | Tensile | Standard | mode of |
|---|---|---|---|---|---|
| | temperature (°C | temperature (°C | strength (MPa | deviation (% | failure |
| 1A1 | 200 | 150 | 2.9 | 25 | cohesive |
| 1A3 | 200 | 150 | 2.7 | 20 | adhesive |
| 1B1 | 200 | 150 | 2.1 | 20 | cohesive |
| 1B2 | 200 | 150 | 2.5 | 25 | partially cohesive and adhesiv |
| 1B3 | 200 | 150 | 2.7 | 20 | partially cohesive and adhesiv |
| 1C1 | 200 | 150 | 2.5 | 20 | partially cohesive and adhesiv |
| 1C2 | 200 | 150 | 3.1 | 25 | adhesive |
| 1C3 | 200 | 150 | 3.4 | 30 | adhesive |
| 4F1 | 175 | 110 | 4.3 | 10 | adhesive |
| 4G1 | 165 | 110 | 7 | 10 | adhesive |
| 4G1 | 170 | 50 | 7.3 | 20 | adhesive |
| 4G2 | 170 | 110 | 8.2 | 10 | adhesive |
| 4G2 | 170 | 70 | 5.5 | 20 | adhesive |
| 4G3 | 160 | 110 | 8.2 | 5 | adhesive |
| 4H1 | 160 | 110 | 8.7 | 5 | adhesive |

**Table 9**

| Polymer | Tensile strength (Mpa) | Standard deviation (%) | Mode of failure |
|---|---|---|---|
| 1A1 | 2.9 | 25 | cohesive |
| 1A3 | 2.7 | 20 | adhesive |
| 1B1 | 2.1 | 20 | cohesive |
| 1B2 | 2.5 | 25 | partially co- and adhesive |
| 1B3 | 2.7 | 20 | partially co- and adhesive |
| 1C1 | 2.5 | 20 | partially co- and adhesive |
| 1C2 | 3.1 | 25 | adhesive |
| 1C3 | 3.4 | 30 | adhesive |

### Example 5

In this experiment a series of polymers were tested which were not according to the invention. These polymers were applied in the same manner as described in Example 4 to prepare the steel/steel lap joints. The results are given in Table 10.

**Table 10**

| Polymer | Tensile strength (MPa) | Standard deviation (%) | Mode of failure |
|---|---|---|---|
| 1D2 | 1.2 | 15 | cohesive |
| 1D3 | 1.0 | 30 | cohesive |
| 1D4 | 2.3 | 15 | adhesive |
| 1E | 1.9 | 40 | adhesive |

### Example 6

In this experiment a polymer was taken which was not according to the invention. Polymer 2A was applied in the same manner as described in Example 4 to prepare the steel/steel lap joints. The lap joints thus prepared had no mechanical strength and over time the test plates came apart under gravity.

## Claims

1. Process for the preparation of a polymer having the following general formula: 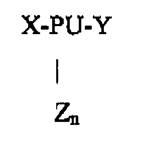 where:
PU is a polymer chain comprising at least one polyurethane chain; and
n ranges from 0 to 8;
X, Y and Z, identical or different, are H-bonding sites;
comprising reacting a polyisocyanate (1) with a functionality of 2 being diphenylmethane diisocyanate, a polyol (2) having a MW from 750 to 6000 and a functionality from 1.9 to 2.5, a polyol (3) having a MW from 62 to 750 with a functionality of 1.9 to 2.1 and an amine compound (4) of formula H₂N-C(R₃)=N-R4, where R₃ and R₄ are ech independently a C1-C6 alkyl or C3-C6 cycloalkyl, or together can form a ring having one or two cycle(s), all being optionally interrupted by one or more heteroatom(s) selected from N, O and S, with a MW less than 400 wherein the amount of isocyanate (1), polyol (2), polyol (3) and amine (4) is 10-50, 35-90, 1-30 and 0.5-20 by weight respectively per 100 parts by weight of isocyanate (1), polyol (2), polyol (3) and amine (4) wherein the reaction is conducted at an isocyanate index of 90 to 200.

2. Process according to claim 1 wherein the amine compound (4) is selected from the group consisting of 2-aminopyrimidine, isocytosine, 6-alkylisocytosine, 2-aminopyridine, 5-amino-uracil 6-tridecylisocytosine, 6-phenylisocytosine, 2-amino-6-(3-butenyl)-4-pyrimidone, p-di-(2-amino-6-ethyl-4-pyrimidone)benzene, 2-amino 4-pyridone, 4-pyrimidone 6-methyl-2-amino-4-pyrimidone, 6-ethyl-2-amino-4-pyrimidone, 6-phenyl-2-amino-4-pyrimidone, 6-(p-nitrophenyl)isocytosine, 6-(trifluoromethyl)isocytosine and their mixtures.

3. Process according to claim 2 wherein the amine compound (4) is 6-methylisocytosine.

4. Process according to claim 1, wherein the PU is a thermoplastic and/or elastomeric polyurethane.

5. Process according to claim 1, wherein said polyurethane chain has an average molecular weight in the range 2000 to 50000, preferably in the range of 5000 to 40000.

6. Supramolecular polymer comprising units that form H-bonds with one another, wherein at least one of these units is a polymer obtained by the process as defined in claim 1.

7. Use of a supramolecular polymer as defined in claim 6 as an hot melt adhesive.

8. Use of a supramolecular polymer as defined in claim 6 in rotational or slush molding.

9. Use of a supramolecular polymer as defined in claim 6 in injection molding.

10. Use of a supramolecular polymer as defined in claim 6 in the manufacture of TPU foams.

## Patentansprüche

1. Verfahren zur Herstellung eines Polymers, das die folgende allgemeine Formel hat: 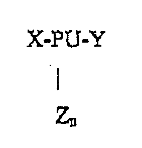 worin:
PU eine Polymerkette ist, die wenigstens eine Polyurethankette umfasst, und n im Bereich von 0 bis 8 liegt;
X, Y und Z, die identisch oder unterschiedlich sind, H-Bindungsstellen sind;
umfassend Umsetzen eines Polyisocyanats (1) mit einer Funktionalität von 2, das Diphenylmethandiisocyanat ist, eines Polyols (2) mit einem MG von 750 bis 6000 und einer Funktionalität von 1,9 bis 2,5, eines Polyols (3) mit einem MG von 62 bis 750 mit einer Funktionalität von 1,9 bis 2,1 und einer Aminverbindung (4) der Formel H₂N-C(R₃)=N-R₄, worin R₃ und R₄, jeweils unabhängig, ein C1-C6-Alkyl oder C3-C6-Cycloalkyl sind oder zusammen einen Ring bilden können, der einen Zyklus oder zwei Zyklen hat, die alle gegebenenfalls durch ein oder mehrere Heteroatom(e), ausgewählt aus N, O und S, unterbrochen sind, mit einem MG von weniger als 400, wobei die Menge an Isocyanat (1), Polyol (2), Polyol (3) und Amin (4) 10-50, 35-90, 1-30 bzw. 05-20 Gewichtsteile pro 100 Gewichtsteile an Isocyanat (1), Polyol (2), Polyol (3) und Amin (4) ist, wobei die Reaktion bei einem Isocyanat-Index von 90 bis 200 durchgeführt wird.

2. Verfahren nach Anspruch 1, wobei die Aminverbindung (4) ausgewählt wird aus der Gruppe, bestehend aus 2-Aminopyrimidin, Isocytosin, 6-Alkylisocytosin, 2-Aminopyridin, 5-Aminouracil, 6-Tridecylisocytosin, 6-Phenylisocytosin, 2-Amino-6-(3-butenyl)-4-pyrimidon, p-Di-(2-amino-6-ethyl-4-pyrimidon)benzol, 2-Amino-4-pyridon, 4-Pyrimidon-6-methyl-2-amino-4-pyrimidon, 6-Ethyl-2-amino-4-pyrimidon, 6-Phenyl-2-amino-4-pyri midon, 6-(p-Nitrophenyl)isocytosin, 6-(Trifluormethyl)isocytosin und deren Gemischen.

3. Verfahren nach Anspruch 2, wobei die Aminverbindung (4) 6-Methylisocytosin ist.

4. Verfahren nach Anspruch 1, wobei das PU ein thermoplastisches und/oder elastomeres Polyurethan ist.

5. Verfahren nach Anspruch 1, wobei die Polyurethankette ein durchschnittliches Molekulargewicht im Bereich von 2000 bis 50000, insbesondere im Bereich von 5000 bis 40000 hat.

6. Supramolekulares Polymer, umfassend Einheiten, die miteinander H-Bindungen bilden, wobei wenigstens eine dieser Einheiten ein Polymer ist, das durch das Verfahren, wie es im Anspruch 1 definiert ist, erhalten wird.

7. Verwendung eines supramolekularen Polymers, wie es im Anspruch 6 definiert ist, als Schmelzkleber.

8. Verwendung eines supramolekularen Polymers, wie es im Anspruch 6 definiert ist, beim Rotations- oder Sturzgießformen.

9. Verwendung eines supramolekularen Polymers, wie es im Anspruch 6 definiert ist, beim Spritzgießen.

10. Verwendung eines supramolekularen Polymers, wie es im Anspruch 6 definiert ist, bei der Herstellung von TPU-Schaumstoffen.

## Revendications

1. Procédé pour la préparation d'un polymère répondant à la formule générale suivante : 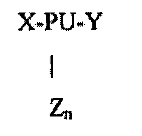 dans laquelle :
PU représente une chaîne polymère comprenant au moins une chaîne polyuréthanne ; et
n a une valeur de 0 à 8 ;
X, Y et Z, qui sont identiques ou différents, sont des sites de liaison H ;
comprenant la réaction d'un polyisocyanate (1) ayant une fonctionnalité égale à 2 consistant en diphénylméthane-diisocyanate, d'un polyol (2) ayant un PM de 750 à 6000 et une fonctionnalité de 1,9 à 2,5, d'un polyol (3) ayant un PM de 62 à 750 et une fonctionnalité de 1,9 à 2,1 et d'un composé du type amine (4) de formule H₂N-C(R₃)=N-R₄, dans laquelle R₃ et R₄ représentent chacun indépendamment un groupe alkyle en C₁ à C₆ ou cycloalkyle en C₃ à C₆, ou bien peuvent former conjointement un noyau ayant un ou deux cycles, tous facultativement interrompus par un ou plusieurs hétéroatomes choisis entre N, O et S, ayant un PM inférieur à 400, dans lequel les quantités d'isocyanate (1), de polyol (2), de polyol (3) et d'amine (4) sont des quantités de 10-50, 35-90, 1-30 et 0,5-20 en poids, respectivement, pour 100 parties en poids d'isocyanate (1), de polyol (2), de polyol (3) et d'amine (4), la réaction étant conduite à un indice d'isocyanate de 90 à 200.

2. Procédé suivant la revendication 1, dans lequel le composé du type amine (4) est choisi dans le groupe consistant en la 2-aminopyrimidine, l'isocytosine, une 6-alkylisocytosine, la 2-aminopyridine, le 5-amino-uracile, la 6-tridécylisocytosine, la 6-phénylisocytosine, la 2-amino-6-(3-butényl)-4-pyrimidone, le p-di-(2-amino-6-éthyl-4-pyrimidone)benzène, la 2-amino-4-pyridone, la 4-pyrimidone, la 6-méthyl-2-amino-4-pyrimidone, la 6-éthyl-2-amino-4-pyrimidone, la 6-phényl-2-amino-4-pyrimidone, la 6-(p-nitro-phényl)isocytosine, la 6-(trifluorométhyl)isocytosine et leurs mélanges.

3. Procédé suivant la revendication 2, dans lequel le composé du type amine (4) est la 6-méthylisocytosine.

4. Procédé suivant la revendication 1, dans lequel le PU est un polyuréthanne thermoplastique et/ou polyuréthanne élastomère.

5. Procédé suivant la revendication 1, dans lequel ladite chaîne polyuréthanne a un poids moléculaire moyen compris dans l'intervalle de 2000 à 50 000, de préférence dans l'intervalle de 5000 à 40 000.

6. Polymère supramoléculaire comprenant des motifs qui forment des liaisons H les uns avec les autres, dans lequel au moins un de ces motifs est un polymère obtenu par le procédé tel que défini dans la revendication 1.

7. Utilisation d'un polymère supramoléculaire tel que défini dans la revendication 6 comme adhésif thermofusible.

8. Utilisation d'un polymère supramoléculaire tel que défini dans la revendication 6 dans le moulage rotatif ou le moulage par embouage.

9. Utilisation d'un polymère supramoléculaire tel que défini dans la revendication 6 dans le moulage par injection.

10. Utilisation d'un polymère supramoléculaire tel que défini dans la revendication 6 dans la production de mousses de TPU.
